(19) Europäisches Patentamt
European Patent Office
Office européen des brevets

(11) Publication number: 0 125 078
A2

# (12) EUROPEAN PATENT APPLICATION

(21) Application number: 84302849.9

(22) Date of filing: 27.04.84

(51) Int. Cl.³: C 01 B 33/28
B 01 J 29/28, C 07 C 87/30

(30) Priority: 29.04.83 US 490083
29.04.83 US 490084

(43) Date of publication of application:
14.11.84 Bulletin 84/46

(84) Designated Contracting States:
BE DE FR GB IT NL SE

(71) Applicant: MOBIL OIL CORPORATION
150 East 42nd Street
New York New York 10017(US)

(72) Inventor: Valyocsik, Ernest William
960 Randolph Drive
Yardley Pennsylvania 19067(US)

(74) Representative: Grundy, Derek George Ritchie et al,
CARPMAELS & RANSFORD 43, Bloomsbury Square
London WC1A 2RA(GB)

## (54) Improved synthesis of ZSM-23 zeolite.

(57) There is disclosed a method for preparing a ZSM-23 crystalline zeolite wherein the organic template used in the synthesis has the formula:

$$(CH_3)_3N^+-R_1-N^+(CH_3)_3$$

wherein $R_1$ is a saturated or unsaturated straight chain hydrocarbyl group containing seven carbon atoms.

The template, designated herein Diquat-7 cation, can be obtained by dissolving a novel type of compound which can be the dihalide salt of the cation or the hydroxide derived from such a salt. Also disclosed is the as-synthesized form of ZSM-23 prepared by using the novel Diquat-7 template as well as catalyst compositions containing the ZSM-23 so synthesized. ZSM-23 is useful as a catalyst for catalytically converting an organic charge.

EP 0 125 078 A2

# IMPROVED SYNTHESIS OF ZSM-23 ZEOLITE

This invention relates to an improved method for synthesizing ZSM-23 crystalline zeolite. The invention also relates to a novel organic nitrogen-containing template useful for promoting synthesis of ZSM-23 from a zeolite crystallization solution.

Zeolitic materials, both natural and synthetic, have been demonstrated in the past to have catalytic properties for various types of hydrocarbon conversion. Certain zeolitic materials are ordered, porous crystalline aluminosilicates, having a definite crystalline structure as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as having a rigid three-dimensional framework of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example an alkali metal or an alkaline earth metal cation. This can be expressed by the relationship of aluminum to the cations, wherein the ratio of aluminum to the number of various cations, such as Ca/2, Sr/2, Na, K, Cs or Li, is equal to unity. One type of cation may be exchanged either entirely or partially with another

type of cation utilizing ion exchange techniques in a conventional manner. By means of such cation exchange, it has been possible to vary the properties of a given aluminosilicate by suitable selection of the cation. The spaces between the tetrahedra are occupied by molecules of water prior to dehydration.

Prior art techniques have resulted in the formation of a great variety of synthetic aluminosilicates. The aluminosilicates have come to be designated by letter or other convenient symbols, as illustrated by zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4 (U.S. Patent 3,314,752), zeolite ZSM-5 (U.S. Patent 3,702,886), zeolite ZSM-11 (U.S. Patent 3,709,979), zeolite ZSM-12 (U.S. Patent 3,832,449), zeolite ZSM-20 (U.S. Patent 3,972,983), zeolite ZSM-23 (U.S. Patent 4,076,842), ZSM-35 (U.S. Patent 4,016,245), and ZSM-38 (U.S. Patent 4,046,859).

The $SiO_2/Al_2O_3$ ratio of a given zeolite is often variable. For example, zeolite X can be synthesized with $SiO_2/Al_2O_3$ ratios of from 2 to 3; zeolite Y, from 3 to about 6. In some zeolites, the upper limit of the $SiO_2/Al_2O_3$ ratio is unbounded. ZSM-5 is one such example wherein the $SiO_2/Al_2O_3$ ratio is at least 5, up to infinity. U.S. Patent 3,941,871, now Re. 29,948, discloses a porous crystalline silicate zeolite made from a reaction mixture containing no deliberately added alumina in the recipe and exhibiting the X-ray diffraction pattern characteristic of ZSM-5 type zeolites. U.S. Patents 4,061,724, 4,073,865 and 4,104,294 describe crystalline silicates or organosilicates of varying alumina and metal content.

Zeolite ZSM-23 has been previously synthesized in the presence of a nitrogen-containing organic cation or template such as pyrrolidine, as disclosed in U.S. Patent 4,076,842. However, the synthesis with the previously known organic templates was conducted at a relatively limited silica ($SiO_2$) to alumina ($Al_2O_3$) mole ratios of 40-250.

In its zeolite synthesis method aspects, the present invention relates to the preparation of Zeolite ZSM-23 having the

x-ray diffraction pattern set forth in Table I hereinafter. The ZSM-23 synthesis method involves forming a reaction mixture containing water and sources of alkali or alkaline earth metal cations, alumina, silica and $R^{++}$ (defined hereinafter) cations, and by thereafter maintaining this reaction mixture under crystallization conditions until crystals of ZSM-23 are formed.

The reaction mixture employed in this method has the following composition in terms of mole ratios of oxides and ions:

| | Broad | Preferred | Most Preferred |
|---|---|---|---|
| $SiO_2/Al_2O_3$ | 40 to 5000 | 50 to 2000 | 60 to 1000 |
| $H_2O/SiO_2$ | 5 to 200 | 20 to 100 | 30 to 60 |
| $OH^-/SiO_2$ | 0 to 0.60 | 0.10 to 0.40 | 0.20 to 0.30 |
| $M^+/SiO_2$ | 0.01 to 2.0 | 0.10 to 1.0 | 0.2 to 0.8 |
| $R^{++}/SiO_2$ | 0.01 to 2.0 | 0.05 to 1.0 | 0.1 to 0.50 |

wherein $M^+$ is a cation of an alkali metal or alkaline earth metal and $R^{++}$ is an organic cation, designated Diquat-7, of the formula $(CH_3)_3N^+-R_1-N^+(CH_3)_3$, wherein $R_1$ is a saturated or unsaturated, straight chain hydrocarbyl group containing seven carbon atoms. This divalent cation is the organic template of the present invention.

In one of its zeolite composition aspects, the present invention also relates to a particular as-synthesized form of Zeolite ZSM-23. This form of ZSM-23 has the z-ray diffraction pattern set forth in Table I hereinafter and also has a composition, in terms of mole ratios of oxides, in the as-synthesized form, in the anhydrous state, as follow:

$$(0.01\text{-}6)RO: \ (0\text{-}2)M_{2/n}O: \ (0.02\text{-}5)Al_2O_3: \ (100)SiO_2$$

wherein RO is an oxide of an organic cation of the formula:

$$(CH_3)_3N^+-R_1-N^+(CH_3)_3$$

wherein $R_1$ is a saturated or unsaturated straight chain hydrocarbyl group containing seven carbon atoms; and wherein M is an alkali metal or alkaline earth metal having a valence n.

In another of its composition aspects, the present invention also relates to a catalyst composition comprising from about 1% to 90% by weight of the ZSM-23 zeolite hereinbefore described and from about 10% to 99% by weight of a porous matrix material..

In its process aspects, the present invention relates to a process for converting an organic charge by contacting the organic charge with a catalyst comprising ZSM-23 as hereinbefore defined. Such contacting occurs under conventional organic conversion conditions.

The present invention also relates to the preparation of the novel organic nitrogen-containing compound which is suitable for forming the template used in the synthesis of Zeolite ZSM-23. Such a compound has the formula:

$$A-(CH_3)_3-N-R_1-N-(CH_3)_3-A$$

wherein A is an organic or inorganic anion and $R_1$ is a saturated or unsaturated straight chain hydrocarbyl group containing seven carbon atoms. Such a compund when dissolved in water yields a divalent organic cation of the formula:

$$(CH_3)_3-N^+-R_1-N^+-(CH_3)_3$$

wherein $R_1$ is a saturated or unsaturated straight chain hydrocarbyl group containing seven carbon atoms. This compound is prepared by reacting a compound of the formula:

$$A-R_1-A$$

wherein A is an organic or inorganic anion and $R_1$ is a saturated or unsaturated straight chain hydrocarbyl group containing seven carbon atoms with trimethylamine.

As noted, the present invention is based on the utilization of the particular divalent Diquat-7 cation as an organic template or directing agent during zeolite synthesis. This organic cation can be derived from the Diquat-7 hydroxide or organic or inorganic salt of Diquat-7. The salts of Diquat-7 are obtained by reacting a suitable precursor salt containing the functional group $R_1$, e.g., a heptyl derivative, containing two anions at the terminal carbon atoms, such as, 1,7-dibromoheptane, with a stoichiometrically required amount of trimethylamine to form a diquaternary salt of the organic cation. The synthesis of the original salt of Diquat-7 can be carried out with any organic or inorganic precursor salt containing the functional group $R_1$. The $R_1$ group of the organic cation may be heptyl or it may have one or more double or triple unsaturated bonds. Thus, for example, $R_1$ may have one double unsaturated bond, or two or three consecutive or non-consecutive double unsaturated bonds, e.g.:

$-CH{=}CH-CH_2-CH_2-CH_2-CH_2-CH_2-$,
$-CH_2-CH{=}CH-CH_2-CH_2-CH_2-CH_2-$,
$-CH_2-CH_2-CH{=}CH-CH_2-CH_2-CH_2-$,
$-CH{=}CH-CH{=}CH-CH_2-CH_2-CH_2-$,
$-CH{=}CH-CH_2-CH_2-CH_2-CH{=}CH-$,
$-CH{=}CH-CH_2-CH{=}CH-CH{=}CH-$,
$-CH_2-CH{=}CH-CH{=}CH-CH{=}CH-$,
$-CH{=}C{=}C{=}CH-CH_2-CH_2-CH_2-$, or
$-CH_2-CH{=}CH-CH-CH{=}C{=}CH-$.

Alternatively, the $R_1$ group may contain at least one triple unsaturated bond, e.g.:

$-C{\equiv}C-CH_2-CH_2-CH_2-CH_2-CH_2-$,
$-CH_2-CH_2-C{\equiv}C-CH_2-CH_2-CH_2-$, or
$-CH_2-CH_2-CH_2-CH_2-C{\equiv}CH_2-$.

However, in the most preferred embodiment, the $R_1$ group is heptyl.

The precursor compound contains two anions at the terminal carbon atoms of the functional group $R_1$. Thus, a precursor salt can have the formula $A-R_1-A$, wherein $R_1$ is as defined above and A is an organic or inorganic anion. Suitable inorganic anions are phosphate, halogens, e.g., fluoride, chloride, bromide or iodide, sulfate, bisulfate, bisulfite, carbonate, bicarbonate, hexafluorophosphate, nitrate, oxyhalogen, such as chlorate, $ClO_3-$ or perchlorate, $ClO_4-$. Representative suitable organic anions are carboxylate, $R-COO^-$, amide, $RCONH_2R$, alkoxide, $R_3CO^-$, or etherate, $RO^-$.

The synthesis of the Diquat-7 salt can be conducted with a continuous stirring at a temperature of about 50°C to about 80°C, preferably about 60°C to about 80°C, at autogenous pressure in a suitable non-aqueous solvent, such as alcohol, e.g., ethanol, toluene or tetrahydrofuran, until crystals of the Diquat-7 salt are formed, usually for about 4 to about 24 hours. The crystals of the product settle to the bottom, the reaction mixture can be cooled, e.g., in a water-ice bath, and the product can be separated from the reaction mixture by any suitable means, e.g., by filtration. The crystals can then be washed with a suitable solvent, e.g., absolute ethanol, followed by a wash with an anhydrous diethyl ether. The Diquat-7 salt crystals are then generally dried.

The hydroxide form of Diquat-7 may be obtained in any conventional manner from the salt of Diquat-7, such as by ion exchanging the salt of Diquat-7 with a suitable hydroxide in any conventional manner, e.g., in an ion-exchange column. Any of the conventional ion-exchange techniques may be used to replace the original anions with the hydroxide anion, as will be obvious to those skilled in the art. Representative of such ion exchange techniques are those disclosed in a wide variety of patents, e.g., U.S. Patents 3,140,249, 3,140,251 and 3,140,253.

The Diquat-7 salts or hydroxide, when used in the ZSM-23 synthesis method of the present invention, disassociate into the Diquat-7 cations and the respective anions. Thus, a Diquat-7

compound in its halide or hydroxide form can then be added to the zeolite-forming reaction mixture hereinbefore described in order to promote formation of ZSM-23 crystals.

The second step of the ZSM-23 synthesis method involves maintaining the zeolite-forming reaction mixture under crystallization conditions until crystals of ZSM-23 are formed. Thereafter, the crystals can be separated from the liquid and recovered. Typical reaction conditions include heating the foregoing reaction mixture to a temperature of from about 212°F (100°C) to 400°F (204°C) for a period of time of from about 24 hours to 30 days. A more preferred temperature range is from about 300°F (149°C) to 375°F (191°C) with the amount of time at a temperature in such range being from about 24 hours to 17 days. The digestion of gel particles is carried out until crystals form. The solid product is separated from the reaction medium, in a conventional manner, e.g., by cooling the reaction mixture to room temperature, filtering and water washing.

The crystalline product is dried at a suitable temperature, e.g., at 230°F (110°C), for from about 8 to about 24 hours. Of course, milder drying conditions may be employed if desired, e.g., room temperature under vacuum.

The reaction mixture for the synthesis of synthetic ZSM-23 can be prepared utilizing materials which can supply the appropriate oxide. Such materials include aluminates, alumina, silicates, silica hydrosol, silica gel, silicic acid and hydroxides. It will be understood that each oxide component utilized in the reaction mixture for preparing ZSM-23 can be supplied by one or more essential reactants and they can be mixed together in any order. For example, the alkali metal can be supplied by an aqueous solution of an oxide or hydroxide thereof, and the oxide of silicon by an aqueous solution of a suitable silicate; the cation $R^{++}$ can be supplied by a hydroxide or an organic or inorganic salt thereof. The reaction mixture can be prepared either batchwise or continuously. Crystal size and crystallization time of the ZSM-23 composition will vary with the nature of the reaction mixture employed.

ZSM-23 zeolite material produced in the process of this invention possesses a definite distinguishing crystalline structure whose x-ray diffraction pattern shows the significant lines set forth in Table I:

TABLE I

| d(A) | I/I |
|---|---|
| 11.2 ± 0.23 | Medium |
| 10.1 ± 0.20 | Weak |
| 7.87 ± 0.15 | Weak |
| 5.59 ± 0.10 | Weak |
| 5.44 ± 0.10 | Weak |
| 4.90 ± 0.10 | Weak |
| 4.53 ± 0.10 | Strong |
| 3.90 ± 0.08 | Very Strong |
| 3.72 ± 0.08 | Very Strong |
| 3.62 ± 0.07 | Very Strong |
| 3.54 ± 0.07 | Medium |
| 3.44 ± 0.07 | Strong |
| 3.36 ± 0.07 | Weak |
| 3.16 ± 0.07 | Weak |
| 3.05 ± 0.06 | Weak |
| 2.99 ± 0.06 | Weak |
| 2.85 ± 0.06 | Weak |
| 2.54 ± 0.05 | Medium |
| 2.47 ± 0.05 | Weak |
| 2.40 ± 0.05 | Weak |
| 2.34 ± 0.05 | Weak |

The above values were determined by standard techniques. The radiation was the K-alpha doublet of copper, and a scinitillation counter spectrometer with a strip chart pen recorder was used. The peak heights, I, and the positions as a function of 2 times theta, where theta is the Bragg angle, were read from the spectrometer

chart. From these, the relative intensities, 100 $I/I_o$, where $I_o$ is the intensity of the strongest line or peak, and d(obs.), the interplanar spacing in Angstrom units, corresponding to the recorded lines, were calculated. It should be understood that this X-ray diffraction pattern is characteristic of all the species of ZSM-23 compositions. Ion exchange of the sodium ion with other cations reveals substantially the same pattern with some minor shifts in interplanar spacing and variation in relative intensity. Other minor variations can occur depending on the silicon to aluminum ratio of the particular sample, and on whether it has previously been subjected to thermal treatment.

In the as-synthesized form, the zeolite Z-SM-23 has the formula, in the anhydrous state and in terms of mole ratios of oxides, as follows:

$$(0.01\text{-}6)RO:\ (0\text{-}2)\ M_{2/n}O:\ (0.02\text{-}5)\ Al_2O_3:\ 100\ SiO_2$$

wherein R is an organic moiety of the formula $(CH_3)_3N^+\text{-}R_1\text{-}N^+(CH_3)_3$ wherein $R_1$ is as defined hereinbefore and $M^+$ is an alkali metal or an alkaline earth metal cation having a valence n. Suitable alkali or alkaline earth metals include lithium (Li), sodium (Na), potassium (K), cesium (Cs), magnesium (Mg), and calcium (Ca), preferably sodium or potassium, and most preferably sodium.

In a preferred embodiment, the mole ratio of $SiO_2/Al_2O_3$ of the ZSM-23 zeolite, in the as-synthesized form, having the above formula, is 40 to 1800. In the most preferred embodiment, the mole ratio of $SiO_2/Al_2O_3$ of the ZSM-23 zeolite, in the as-synthesized form, having the above formula, is 50 to 900.

ZSM-23 zeolites can be used as catalysts either in the alkali metal form, e.g., the sodium form; the ammonium form, the hydrogen form; or the multivalent forms or combinations of these forms. They can also be used in intimate combination with a hydrogenating component, such as tungsten, vanadium, molybdenum, rhenium, nickel, cobalt, chromium, manganese, or a noble metal

such as platinum or palladium where a hydrogenation or dehydrogenation function is to be performed. Such component can be exchanged into the composition, impregnated therein or physically intimately admixed therewith. Such component can be impregnated in or on to the ZSM-23 composition, such as, for example, in the case of platinum, treating the composition with a platinum metal-containing ion. Thus, suitable platinum compounds include chloroplatinic acid, platinous chloride and various compounds containing the platinum ammine complex.

The compounds of the useful platinum or other metals can be divided into compounds in which the metal is present in the cation of the compound and compounds in which it is present in the anion of the compound. Both types of compounds which contain the metal in the ionic state can be used. A solution in which platinum metals are in the form of a cation or cation complex, e.g., $[Pt(NH_3)_4]Cl_2$, is particularly useful. For some hydrocarbon conversion processes, this noble metal form of the ZSM-23 catalyst is unnecessary such as in low temperature, liquid phase ortho xylene isomerization.

When ZSM-23 is employed as an absorbent or as a catalyst in one of the aforementioned processes, partial dehydration of the ZSM-23 material is necessary. This can be accomplished by heating to a temperature of about 200° to about 600°C. in an atmosphere such as air, nitrogen or the like, at atmospheric or subatmospheric pressures for between 1 and 48 hours. Dehydration can also be performed at lower temperatures by placing the ZSM-23 catalyst in a vacuum, however, a longer time is required to obtain a sufficient amount of dehydration.

The original cations of the as-synthesized ZSM-23 may be replaced at least in part by other ions using conventional ion exchange techniques. It is also generally desirable to precalcine the ZSM-23 zeolite crystals prior to ion exchange in order to remove the bulky diquat template cations which are formed in the as-synthesized form of the ZSM-23 materials of this invention. Precalcination can be carried out, for example, at temperatures from about 300°C to 600°C for a period of from about 0.5 to 24 hours.

The replacing ions introduced to replace the original alkali, alkaline earth and/or organic cations may be any that are desired so long as they can pass through the channels within the zeolite crystals. The as-synthesized zeolite may be conveniently converted into the hydrogen, the univalent or multivalent cationic forms by calcining and/or base exchanging the zeolite to remove the sodium and/or template cations and replace them with such ions as hydrogen, ammonium and metal cations, including mixtures thereof of Groups IIA, IIIA, IVA, VIA, IB, IIB, IIIB, IVB, VIB, or VIIIA of the Periodic Table. Of the replacing metallic cations, particular preference is given to cations of metals such as rare earth, Mn, Ca, Mg, Zn, Cd, Pd, Ni, Ti, Al, Sn, Fe and Co.

Typical ion exchange techniques comprise contacting the synthetic ZSM-23 zeolite with a salt of the desired replacing cation or cations. Although a wide variety of salts can be employed, particular preference is given to chlorides, nitrates and sulfates. Representative ion exchange techniques are disclosed in a wide variety of patents including U.S. Pat. Nos. 3,140,149, 3,140,151, and 3,140,253.

Following contact with the salt solution of the desired replacing cation, the zeolite is preferably washed with water and dried at a temperature ranging from 50°C to about 300°C and thereafter may be calcined in air or other inert gas at from about 200°C to a temperature below the zeolite decomposition temperature, preferably about 900°C, for periods of time ranging from 1 to 48 hours or more to produce a catalytically-active thermal decomposition product thereof.

Regardless of the cations replacing the alkali metal in the synthesized form of ZSM-23, the spatial arrangement of the aluminum, silicon and oxygen atoms which form the basic crystal lattices of ZSM-23 remains essentially unchanged by the described replacement of alkali or alkaline earth metal as determined by taking an X-ray powder diffraction pattern of the ion-exchanged material.

The aluminosilicate prepared by the instant invention is formed in a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the aluminosilicate can be extruded before drying or dried or partially dried and then extruded.

In the case of many catalysts, it is desired to incorporate the ZSM-23 zeolite with another material resistant to the temperatures and other conditions employed in organic conversion processes. Such matrix materials include active and inactive materials and synthetic or naturally occurring zeolites as well as inorganic materials, such as clays, silica and/or metal oxides. The latter may be either naturally occurring or in the form of gelatinous precipitates, sols or gels including mixtures of silica and metal oxides. The use of a matrix material in conjunction with the ZSM-23, i.e., combined therewith, which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. Frequently, zeolite materials have been incorporated into naturally occurring clays, e.g., bentonite and kaolin. These materials, i.e., clays, oxides, etc., function, in part, as binders for the catalyst. It is desirable to provide a catalyst having good crush strength, because in a petroleum refinery the catalyst is often subjected to rough handling, which tends to break the catalyst down into powder-like materials which cause problems in processing.

Naturally occurring clays which can be composited with the synthetic ZSM-23 catalyst include the montmorillonite and kaolin family, which include the subbentonites, and the kaolins commonly known as Dixie, McNamee, Georgia and Florida clays or others in which the main mineral constituents are halloysite, kaolinite, dickite, nacrite, or anauxite. Such clays can be used in the raw

state as originally mined or initially subjected to calcination, acid treatment or chemical modification.

In addition to the foregoing materials, the ZSM-23 catalyst can be composited with a porous matrix material such as silica-alumina, silica-magnesia, silica-zirconia, silica-thoria, silica-beryllia, silica-titania as well as ternary compositions such as silica -alumina-thoria, silica-alumina-zirconia, silica-alumina-magnesia and silica-magnesia-zirconia. The matrix can be in the form of a cogel. A mixture of these components could also be used. The relative proportions of finely divided crystalline aluminosilicate ZSM-23 and inorganic oxide matrix vary widely with the crystalline aluminosilicate content ranging from about 1 to about 90 percent by weight and more usually in the range of about 2 to about 70 percent by weight of the composite.

While synthetic ZSM-23 zeolites may be used in a wide variety of organic compound conversion reactions, they are notably useful in the processes of polymerization, aromatization, reforming, esterification and cracking. Other hydrocarbon conversion processes for which ZSM-23 may be utilized in one or more of its active forms include, for example, hydrocracking and converting light aliphatics to aromatics, such as disclosed in U.S. Patent No. 3,760,024.

The ZSM-23 zeolite is particularly useful in the processes of toluene disproportionation and alkylation, catalytic dewaxing, olefin polymerization and aromatization of olefins or paraffins. In employing the ZSM-23 catalyst of this invention for polymerization of olefin containing liquid or gaseous charge stocks, such charge stocks can be polymerized at temperatures of between 550° and 850°F (288°C to 454°C) at an hourly space velocity of between 0.5 and 50 WHSV and a pressure of between 0.1 and 800 psig (102 kPa to 5617 kPa).

In employing the catalyst of the present invention for aromatization of gaseous or liquid charge stocks which may be olefinic or paraffinic with or without aromatics present, such stocks can be aromatized at temperatures of between 800° and 1200°F (427°C to 649°C) and pressures from 1 to 10 atmospheres (101 kPa to 1014 kPa) and space velocities between 0.1 and 10 WHSV.

The following examples illustrate specific non-limitative embodiments of the invention. All percent proportions in percent by weight, unless otherwise indicated.

EXAMPLE A

The Diquat-7 dibromide salt used to crystallize zeolite ZSM-23 was prepared by reacting 1,7-dibromoheptane and trimethylamine in accordance with the following stoichiometric equation:

$$Br-(CH_2)_7-Br + 2(CH_3)_3N \longrightarrow Br(CH_3)_3N(CH_2)_7N(CH_3)_3Br$$

The procedure used was as follows:

150 grams (0.58 mole) of 1,7-dibromoheptane (available from Aldrich Chemical Company) was weighed out and transferred directly to a two-liter, three-necked reaction flask equipped with a stirrer. 300 ml absolute ethanol was added to the reaction flask while the contents of the flask were stirred continuously. Then, 300 grams (excess) of trimethylamine solution (25% in methanol, available from Eastman Kodak Chemical Company) was transferred directly to the two-liter reaction flask. The two-liter reaction flask was fitted with a dry-ice condenser to minimize $(CH_3)_3N$ loss during reflux.

The reaction mixture was refluxed for about 14 hours. White crystals of Diquat-7 dibromide were formed and separated from the reaction solution at the end of the reflux period. The reaction flask was cooled by immersion in water-ice bath. The product was then filtered on a Buchner funnel. Product crystals were washed on the funnel several times with absolute ethanol, then several times with anhydrous diethyl ether. The Diquat-7 dibromine product crystals were dried by air stream on the Buchner funnel after the ether wash.

EXAMPLE 1

50.0 grams (g) of Q-brand sodium silicate (comprising 28.5% by weight (wt.) of $SiO_2$, 8.8% by wt. of $Na_2O$ and 62.7% by wt. of $H_2O$), was added to 50.0 grams of distilled water with stirring until the solution was clear, colorless and uniform. A second solution was produced by adding 2.4 grams of aluminum sulfate [$Al_2(SO_4)_3 \cdot 16H_2O$] and 1.8 grams of $H_2SO_4$ (96%) to 83.9 grams of distilled water. This second solution was stirred until complete dissolution, whereupon 13.1 grams of the Diquat-7 salt produced in Example A was added to the second solution. This second solution and the first solution, containing Q-brand sodium silicate, were then transferred directly to a 300ml capacity stainless-steel autoclave with vigorous mixing at room temperature and autogeneous pressure. After a uniform hydrogel was produced, the autoclave was sealed and heating begun.

The molar ratios of the ingredients in the reaction mixture were:

| | |
|---|---|
| $SiO_2/Al_2O_3$ | = 60 |
| $H_2O/SiO_2$ | = 40 |
| $OH^-/SiO_2$ | = 0.30 |
| $Na^+/SiO_2$ | = 0.59 |
| $R^{++}/SiO_2$ | = 0.15 |

The mixture was continuously stirred and maintained at 160°C for about 5 days, at which time crystallization was complete. The product crystals were filtered out of the solution. The product crystals were then transferred to a beaker containing distilled water and boiled, with stirring, for one hour, after which the product was refiltered and dried under a heat lamp in an air stream for 2 hours.

X-ray analysis of the product showed the crystals to have a diffraction pattern corresponding to that of Table I.

EXAMPLES 2-10

Crystallization of ZSM-23 was conducted in these examples under the same reaction conditions as in Example 1, and with the same reactants, except that silica sol (30% wt. of $SiO_2$, 70% $H_2O$) was used in some examples, as indicated, as the source of silica instead of the Q-brand sodium silicate, and sodium aluminate ($NaAlO_2$) was used in some examples, also as indicated, as the source of aluminum instead of $Al_2(SO_4)_3 \cdot 16H_2O$. The reaction mixture composition, the length of the syntheses and the identity of the product, as identified by the X-ray diffraction data are set forth below in Table II.

TABLE II

Mixture Composition (Mole Ratios)[a]

| Example | $SiO_2/Al_2O_3$ | $OH^-/SiO_2$ | $Na^+/SiO_2$ | Diquat-7[b]/$SiO_2$ | Synthesis Time (hrs) | Product |
|---|---|---|---|---|---|---|
| 2 | 90 | 0.30 | 0.32 | 0.07 | 72 | 100% ZSM-23 |
| 3[d] | 90 | 0.30 | 0.32 | 0.07 | 72 | 100% ZSM-23 |
| 4 | 200 | 0.20 | 0.21 | 0.10 | 120 | 100% ZSM-23 |
| 5[d] | 200 | 0.20 | 0.21 | 0.10 | 120 | 100% ZSM-23 |
| 6 | 400 | 0.20 | 0.20 | 0.10 | 144 | 100% ZSM-23 |
| 7[d] | 400 | 0.20 | 0.20 | 0.10 | 84 | 100% ZSM-23 |
| 8[d] | 500 | 0.20 | 0.20 | 0.10 | 96 | 100% ZSM-23 |
| 9[d] | 700 | 0.20 | 0.20 | 0.10 | 168 | 100% ZSM-23 |
| 10[d] | 1000 | 0.20 | 0.20 | 0.10 | 120 | 100% ZSM-23 |

a.-- $H_2O/SiO_2$ = 40 for all examples.

b.-- Diquat-7 = $(CH_3)_3N(CH_2)_7N(CH_3)_3$; Bromide salt.

c -- Q-brand sodium silicate; $Al_2(SO_4)_3$ 16 $H_2O$.

d -- Silica sol (30% $SiO_2$; 70% $H_2O$)); $NaAlO_2$.

Analytical data for the as-synthesized ZSM-23 samples, in terms of mole ratios, of some examples is set forth in Table III.

TABLE III

| Example | C/N (mole ratio) | Moles per mole $Al_2O_3$ | | |
|---|---|---|---|---|
| | | $N_2O$ | $Na_2O$ | $SiO_2$ |
| 1 | -- | -- | -- | 41 |
| 2 | 6.5 | 1.6 | 0.83 | 56 |
| 3 | 6.5 | 1.6 | 0.83 | 56 |
| 4 | 6.1 | 4.7 | 0.78 | 173 |
| 5 | 6.1 | 4.7 | 0.78 | 173 |
| 7 | 6.9 | 6.3 | 2.6 | 274 |
| 9 | -- | -- | -- | 420 |

It will be apparent to those skilled in the art that the specific embodiments discussed above can be successfully repeated with ingredients equivalent to those generically or specifically set forth above and under variable process conditions.

From the foregoing specification, one skilled in the art can readily ascertain the essential features of this invention and without departing from the spirit and scope thereof can adapt it to various diverse applications.

CLAIMS:

1. A method for preparing a ZSM-23 zeolite having an X-ray diffraction pattern substantially the same as that set forth in Table I of the specification, which process comprises:

a) forming a reaction mixture containing water and sources of alkali metal or alkaline earth metal cations, an oxide of aluminum, an oxide of silicon and nitrogen-containing organic cations, $R^{++}$, said mixture having the following composition, in terms of mole ratios of oxides and ions:

$SiO_2/Al_2O_3$ = 40 to 5000
$H_2O/SiO_2$ = 5 to 200
$OH^-/SiO_2$ = 0 to 0.60
$M^+/SiO_2$ = 0.01 to 2.0
$R^{++}/SiO_2$ = 0.01 to 2.0

wherein $M^+$ is a cation of an alkali metal or alkaline earth metal and $R^{++}$ is an organic cation of the formula:

$$(CH_3)_3N^+-R_1-N^+(CH_3)_3$$

wherein $R_1$ is a saturated or unsaturated straight chain hydrocarbyl group containing seven carbon atoms; and

b) maintaining the reaction mixture under crystallization conditions until crystals of the ZSM-23 zeolite are formed.

2. A method according to Claim 1 wherein $R_1$ in the formula for the organic cation is a straight chain hydrocarbyl group containing three double bonds.

3. A method according to Claim 2 wherein $R_1$ in the formula for the organic cation is $-CH=CH-CH_2-CH=CH-CH=CH-$.

4. A method according to Claim 1 wherein $R_1$ in the formula for the organic cation is heptyl.

5. A method according to any of Claims 1 to 4 wherein the mole ratio $SiO_2/Al_2O_3$ in the reaction mixture from 60 to 1000.

6. A process according to any of Claims 1 to 5 which comprises the additional steps of recovering the Zeolite ZSM-23 crystals and precalcining said crystals at a temperature of from $300^oC$ to $600^oC$ for a period of from 0.5 to 24 hours.

7. A process according to Claim 7 wherein the precalcined zeolite crystals are treated by ion exchange and/or additional calcination to place said crystals in the hydrogen, ammonium or metal cation form wherein said metal cation is derived from metals of Groups IIA, IIIA, IVA, VIA, IB, IIB, IIIB, IVB, VIB or VIIIA of the Periodic Table.

8. A synthetic crystalline ZSM-23 zeolite material having an X-ray diffraction pattern substantially the same as that of Table I of the specification and having a composition, in terms of moles of oxides, in the as-synthesized form, in the anhydrous state, as follow:

$$(0.01\text{-}6)RO: \quad (0\text{-}2)M_{2/n}O: \quad (0.02\text{-}5)Al_2O_3: \quad (100)SiO_2$$

wherein RO is an oxide of an organic cation of the formula

$$(CH_3)_3N^+\text{-}R_1\text{-}N^+(CH_3)_3$$

wherein $R_1$ is a saturated or unsaturated straight chain hydrocarbyl group containing seven carbon atoms; and wherein M is an alkali metal or alkaline earth metal having a valence n.

9. A ZSM-23 zeolite material according to Claim 8 wherein the hydrocarbyl group of the organic cation is heptyl or is $-CH=CH-CH_2-CH=CH-CH=CH-$.

10. A ZSM-23 zeolite material according to Claim 8 or Claim 9 wherein the silica to alumina molar ratio in the zeolite is from 50 to 900.

11. A catalyst comprising:

a) from about 1% to 90% by weight of a ZSM-23 zeolite material having an X-ray diffraction pattern substantially the same as that of Table I of the specification and having a composition, in terms of moles of oxides, in the as-synthesized form in the anhydrous state, as follows:

$$(0.01\text{-}6)RO: \ (0\text{-}2)M_{2/n}O: \ (0.02\text{-}5)Al_2O_3: \ (100)SiO_2$$

wherein RO is an oxide of an organic cation of the formula

$$(CH_3)_3N^+\text{-}R_1\text{-}N^+(CH_3)_3$$

where $R_1$ is a saturated or unsaturated straight chain hydrocarbyl group containing seven carbon atoms; and wherein M is an alkali metal or alkaline earth metal having a valence n; and,

b) from about 10% to 99% by weight of a porous matrix material.

12. A process for converting an organic charge which comprises contacting the same, under conversion conditions, with a catalyst composition comprising the ZSM-23 zeolite of Claim 8.

13. An organic nitrogen-containing compound suitable for use as a template in the synthesis of Zeolite ZSM-23, said compound having the formula:

$$A\text{-}(CH_3)_3\text{-}N\text{-}R_1\text{-}N\text{-}(CH_3)_3\text{-}A$$

wherein A is an organic or inorganic anion and $R_1$ is a saturated or unsaturated straight chain hydrocarbyl group containing seven carbon atoms.

14. A method for preparing a compound which upon dissolution in water yields a divalent organic cation of the formula:

$$(CH_3)_3-N^+-R_1-N^+-(CH_3)_3$$

wherein $R_1$ is a saturated or unsaturated straight chain hydrocarbyl group containing seven carbon atoms, said method comprising reacting a compound of the formula:

$$A-R_1-A$$

wherein A is an organic or inorganic anion and $R_1$ is a saturated or unsaturated straight chain hydrocarbyl group containing seven carbon atoms with trimethylamine.

3101H/0188H